# FASCICULE DE BREVET EUROPEEN

(11) **EP 2 631 723 B1**
(45) Date de publication et mention de la délivrance du brevet: **22.07.2015**
(21) Numéro de dépôt: 13156380.1
(22) Date de dépôt: 22.02.2013
(51) Int. Cl.: G06F 3/0488, G05B 15/02, G05B 19/042, G06F 3/0486

(54) **Procédés de commande et de paramétrage d'une installation domotique et installation domotique mettant en oeuvre ces procédés.**
Verfahren zur Steuerung und Parametrierung einer Gebäudetechnik-Installation, und Gebäudetechnik-Installation zur Umsetzung dieser Verfahren
Methods for controlling and parameterising a home-automation installation and home-automation system using said methods

(30) Priorité: 27.02.2012 FR 1251761
(43) Date de publication de la demande: 28.08.2013
(73) Titulaire: Somfy SAS, 74300 Cluses (FR)
(72) Inventeur: Duchene, Isabelle, 74970 MARIGNIER (FR); Devis, Frédéric, 74330 Epagny (FR); Cogne, Pierre-Yves, 74250 BOGEVE (FR); Espinasse, Alexandre, 74970 MARIGNIER (FR)
(74) Mandataire: Bugnion Genève

(56) Documents cités:
- DE-A1- 3 335 226
- DE-A1-102006 020 121
- FR-A1- 2 586 833
- VAILLANT: "Betriebsanleitung VRC-CB", 19870228, no. version 03, 28 février 1987 (1987-02-28), pages 1-16, XP007922192,

## Description

### DOMAINE TECHNIQUE DE L'INVENTION

L'invention se rapporte à une installation domotique, c'est-à-dire au sens large une installation comportant des équipements électriques communicants, motorisés ou non, dans un bâtiment, notamment un bâtiment d'habitation. Elle se rapporte également à une commande pour une telle installation et à des moyens pour faciliter le paramétrage d'une telle commande.

### ÉTAT DE LA TECHNIQUE ANTÉRIEURE

La demande de brevet WO2007/124786A1 décrit une installation domotique munie de capteurs et d'équipements domotiques commandés. A chaque capteur peuvent être associés deux scénarios de commande, l'un lorsque le niveau mesuré est en dessous d'un seuil, et l'autre lorsque la valeur mesurée est au dessus de ce seuil.

Ces scénarios de commande sont directement programmés dans l'électronique du capteur. Ainsi le capteur envoie-t-il à l'actionneur un ordre qui est le code associé au scénario de commande correspondant à la mesure de l'instant présent et l'actionneur qui reçoit cet ordre est capable de l'interpréter et d'agir.

Cette installation permet d'utiliser des scénarios de commande pour commander l'installation domotique mais est difficile à paramétrer : l'installateur doit définir au niveau de chaque capteur le seuil de mesure au-delà duquel un scénario de commande différent est envoyé. Cette manipulation répétée nécessite beaucoup de temps et elle peut en outre imposer des mesures particulières de protection de l'installateur intervenant sur l'installation, si le capteur est placé dans un endroit inaccessible (en hauteur contre un mur par exemple), ce qui est particulièrement pénalisant s'il faut le manipuler à plusieurs reprises. Par ailleurs, les capteurs utilisés dans cette installation sont spécifiques, dans la mesure où ils envoient uniquement un ordre sous la forme d'un code de scénario de commande, ou sont polyvalents au sens où ils peuvent envoyer une valeur ou un code correspondant au scénario de commande. Dans les deux cas le coût de tels capteurs est élevé. De la même manière les équipements domotiques commandés doivent intégrer un moyen de traitement de l'information plus important que les actionneurs traditionnels pour pouvoir associer un code de scénario de commande à des actions concrètes.

La demande de brevet EP2000867A1 décrit comment on peut associer un scénario de commande à un niveau de mesure d'un capteur. Par exemple un capteur et un moteur de volet roulant sont placés en mode programmation ; un seuil est sélectionné au niveau du capteur ; le volet roulant est placé dans une position donnée par la mise en mouvement du moteur ; une communication est mise en place entre les deux pour réaliser l'association de ce niveau de mesure avec la position du moteur.

Là encore, la phase d'appairage peut être délicate et nécessiter des mesure particulières de protection de la personne intervenant sur l'installation, car le capteur peut-être dans une zone difficile d'accès. De même, la procédure d'installation peut être fastidieuse car il faut effectuer cette opération pour chaque capteur et chaque actionneur à associer. Dès lors la taille de l'installation est limitée ou très onéreuse.

Dans la notice d'utilisation VAILLANT, "Betriebsanleitung VRC-CB", version 3, février 1987, pages 1-16, XP007922192 est décrit un procédé selon le préambule de la revendication 1 et une unité de commande selon le préambule de la revendication 12.

### EXPOSÉ DE L'INVENTION

L'invention vise à remédier aux inconvénients de l'état de la technique et à proposer, des moyens propres à faciliter la commande, la programmation et la reprogrammation d'une installation domotique.

Suivant un premier aspect de l'invention, celle-ci a trait à un procédé de commande selon la revendication 1.

Le procédé permet ainsi d'exécuter, à partir d'une unité de commande unique communiquant avec les capteurs et les équipements domotiques commandés, une grande variété de scénarios de commande, qui peuvent comporter un ou plusieurs ordres, envoyés à un ou plusieurs équipements, simultanément ou suivant une séquence prédéterminée.

La procédure de paramétrage par étapes successives et intuitives, permet de faire exécuter à l'installation des ordres complexes, dépendant simultanément de plages temporelles et de l'état réel de l'environnement ou de l'installation elle-même, tel que mesuré par certains au moins des capteurs. Les paramètres choisis au cours du paramétrage sont soit mémorisés intégralement dans l'unité de commande, soit mémorisés partiellement dans l'unité de commande et transmis partiellement aux capteurs eux-mêmes. La programmation peut être exécutée, de manière préférentielle, à l'aide d'une interface de programmation, incluant par exemple un afficheur graphique et une interface de saisie, qui peuvent être réunies par exemple dans un écran tactile.

L'état ou le changement d'état peuvent être notamment :
- une plage de valeurs délimitées par au moins une valeur seuil associée au capteur paramétré, ou
- un passage d'une première plage de valeurs délimitée par une valeur seuil associée au capteur paramétré à une deuxième plage de valeurs délimitée par la valeur seuil, ou
- une valeur d'état du capteur paramétré, ce qui s'avère particulièrement adapté pour un capteur livrant un faible nombre de valeurs d'état, par exemple un capteur livrant une information binaire ou une information à au plus huit états sur un octet.

Suivant un mode de réalisation, le procédé comporte une étape de mémorisation préalable de la ou des valeurs seuils associées au capteur paramétré.

Suivant un mode de réalisation, l'ordre envoyé à l'équipement domotique commandé est un code identifiant du scénario de commande retenu, le procédé comportant en outre une étape d'exécution de l'ordre par l'équipement domotique commandé en fonction du code du scénario de commande retenu, programmé dans l'équipement domotique commandé. On permet ainsi d'alléger les tâches exécutées par l'unité de commande, et de reporter une partie de la complexité de l'exécution des ordres à l'intelligence embarquée dans l'équipement domotique commandé. Alternativement, on peut prévoir que le scénario de commande mémorisé au niveau de l'unité de commande comporte, pour un équipement domotique donné, une série d'ordres, dont certains peuvent être dépendants d'un retour d'information de la part de l'équipement domotique considéré.

Suivant un mode de réalisation, le procédé comporte en outre une étape préalable de mémorisation d'un ou plusieurs scénarios de commande, chacun des scénarios de commande étant associé à au moins une plage temporelle périodique prédéterminée et à au moins une valeur d'au moins un signal parmi les signaux en provenance des capteurs.

Suivant un mode de réalisation est prévue une procédure de priorisation comportant :
- l'association à au moins un état ou changement d'état d'au moins un capteur prioritaire parmi les capteurs d'un niveau de priorité élevé et à d'un scénario de commande prioritaire,
- en cas de survenance de l'état ou du changement d'état associé au niveau de priorité élevé, l'envoi par l'unité de commande envoie à au moins un des équipements domotiques commandés d'au moins un ordre fonction du scénario de commande prioritaire et l'inhibition de la sélection d'au moins un autre scénario de commande.

On peut ainsi éviter que des ordres contradictoires soient donnés aux équipements domotiques commandés. Si le capteur prioritaire est relié à une fonction liée à la sécurité des personnes ou à la sûreté du bâtiment, on peut prévoir que la survenance de l'état ou du changement d'état associé au niveau de priorité élevé inhibe la sélection de tout autre scénario que le scénario prioritaire. On peut également prévoir plusieurs niveaux de priorité, les capteurs d'incendies par exemple ayant une priorité absolue, et les capteurs d'intrusion ayant un niveau de priorité intermédiaire, supérieur à celui d'autres capteurs, par exemple d'ensoleillement.

Suivant un mode de réalisation, on prévoit que la plage temporelle périodique d'activation et/ou la plage temporelle périodique d'inhibition puissent être définies par au moins un des éléments suivants ou une combinaison de plusieurs des éléments suivants :
- au moins une plage horaire,
- au moins un jour de la semaine ou du mois
- au moins un mois de l'année.

L'étape d'assignation peut comporter la sélection d'au moins une valeur seuil du signal en provenance du capteur à paramétrer et la sélection d'au moins un premier scénario de commande assigné à un intervalle de valeurs borné par la valeur seuil. Pour un capteur livrant un signal qui varie dans une plage donnée, on pourra ainsi déterminer un nombre N de valeurs seuils, permettant le cas échéant de définir jusqu'à N+1 intervalles, et d'affecter à l'un ou plusieurs de ces intervalles des scénarios de commande.

Alternativement, la procédure peut comporter la sélection d'au moins une valeur seuil du signal en provenance du capteur à paramétrer et la sélection d'au moins un premier scénario de commande assigné à un passage du signal en provenance du capteur à paramétrer par la valeur seuil dans un sens prédéterminé.

Alternativement, la procédure peut comporter la sélection d'au moins une valeur d'état du signal en provenance du capteur à paramétrer et la sélection d'au moins un premier scénario de commande assigné à la valeur d'état. Cette procédure sera particulièrement adaptée à des capteurs délivrant des signaux binaires du type ouvert/fermé, seuil de température ou d'ensoleillement dépassé ou non, etc...

Suivant un mode de réalisation, le procédé comporte une étape de sélection d'un programme parmi plusieurs programmes possibles, les étapes de choix d'un capteur à paramétrer parmi les capteurs, d'association au capteur à paramétrer d'au moins une plage temporelle périodique d'activation et/ou au moins une plage temporelle périodique d'inhibition, et d'association à au moins un état ou un changement d'état du signal en provenance du capteur à paramétrer d'au moins un scénario de commande étant affectées au programme sélectionné.

On peut ainsi prévoir plusieurs programmes, chacun associés par exemple à des plages temporelles récurrentes différentes pour un capteur donné, par exemple un programme associé à des plages horaires valables certains jours de la semaine et un programme associé à d'autres plages horaires valables d'autres jours de la semaine, chaque programme étant associé à des scénarios de commande spécifiques se déroulant en fonction de l'état du capteur dans les plages horaires spécifiées.

L'étape de choix du capteur peut par ailleurs comporter une étape préliminaire de choix d'un type de capteur parmi plusieurs types de capteurs, suivie d'une étape de choix d'un capteur du type choisi parmi plusieurs capteurs du type choisi. Il sera ainsi possible par étapes successives, de sélectionner le capteur souhaité dans une installation de taille importante incluant de nombreux capteurs de types variés. Un type donné de capteurs regroupera par exemple les capteurs de température, d'ensoleillement, de force du vent, ou bien les capteurs situé dans une aire géographique donnée du bâtiment.

Selon un mode de réalisation de l'invention, le procédé comporte au moins une étape préalable de définition des scénarios de commande. Chaque scénario de commande peut comporter un ou plusieurs ordres, donnés à un ou plusieurs équipements domotiques commandés, de manière simultanée ou séquencée. Dans la mesure où la définition des scénarios de commande peut s'avérer relativement complexe, il peut s'avérer préférable, suivant un mode de réalisation, d'en réserver la programmation à un opérateur averti, alors que la programmation du choix des capteurs, des seuils de déclenchements, et des plages temporelles périodiques peut être plus largement libre d'accès à l'utilisateur final, occupant du bâtiment équipé. Alternativement, on peut décider d'ouvrir la programmation des scénarios de commande, ou de certains d'entre eux au moins, à l'utilisateur final. Suivant un mode de réalisation, on prévoit d'associer à au moins un scénario de commande au moins un ordre à transmettre à au moins un des équipements domotiques commandé.

Suivant un mode de réalisation, le procédé comporte une étape d'envoi par l'unité de commande à au moins un des capteurs d'un signal de mise en sommeil au début de la plage temporelle périodique d'inhibition et un signal de réveil au début de la plage temporelle périodique d'activation.

Suivant un autre aspect de l'invention, celle-ci a trait à un procédé de paramétrage d'une installation domotique comportant plusieurs capteurs, plusieurs équipements domotiques commandés et une unité de commande communiquant avec les capteurs et l'équipement domotique commandé, **caractérisé en ce qu'il** comporte les étapes suivantes réalisées par l'intermédiaire d'une interface de programmation reliée à l'unité de commande :
- choix d'un capteur à paramétrer parmi les capteurs ;
- association au capteur à paramétrer d'au moins une plage temporelle périodique d'activation et/ou au moins une plage temporelle périodique d'inhibition ; et
- association à au moins un état ou un changement d'état du signal en provenance du capteur à paramétrer d'au moins un scénario de commande.

Ce procédé de paramétrage permet de définir de façon simple et intuitive un fonctionnement de l'installation élaboré, tenant compte de plage temporelles et de valeurs de signaux pour sélectionner et dérouler des scénarios de commande de fonctionnement. Ce procédé de programmation peut en outre inclure tout ou partie des caractéristiques de la procédure de programmation décrite en liaison avec le premier aspect de l'invention.

Suivant un autre aspect de l'invention, celle-ci a trait à une unité de commande et une installation domotique pour la mise en oeuvre du procédé de commande et/ou du procédé de programmation selon les aspects précédents de l'invention. On appelle ici unité de commande une unité fonctionnelle, préférentiellement réalisée sous forme d'unité structurelle, à l'intérieur d'un boîtier unitaire.

Plus spécifiquement, et selon un autre aspect de l'invention, celle-ci a trait à une unité de commande pour une installation domotique comportant plusieurs capteurs, plusieurs équipements domotiques commandés, l'unité de commande communiquant avec les capteurs et les équipements domotiques commandés et comportant :
- des moyens de réception de signaux en provenance des capteurs ;
- des moyens de mémorisation d'un ou plusieurs scénarios de commande, chacun des scénarios de commande étant associé d'une part à au moins une plage temporelle périodique associée à au moins un capteur paramétré parmi les capteurs et d'autre part à au moins un état ou changement d'état d'un signal en provenance du capteur paramétré ;
- des moyens de sélection d'au moins un scénario de commande courant parmi le ou les scénarios de commande mémorisés, lorsque l'état ou le changement d'état du capteur paramétré associé au scénario de commande courant survient à un instant courant dans la plage temporelle périodique associée ; et
- des moyens de transmission à l'équipement domotique commandé d'au moins un ordre fonction du scénario de commande courant.

Suivant un autre aspect de l'invention, celle-ci a trait à un ensemble de commande comportant l'unité de commande précédemment décrite et une interface de programmation reliée à l'unité de commande, l'interface présentant un afficheur graphique affichant :
- au moins un écran pour choisir un capteur à paramétrer parmi les capteurs ;
- au moins un écran pour associer au capteur à paramétrer au moins une plage temporelle périodique d'activation et/ou au moins une plage temporelle périodique d'inhibition ; et
- au moins un écran pour associer au moins un scénario de commande à au moins un état ou un changement d'état du signal en provenance du capteur à paramétrer.

L'unité de commande et l'interface de programmation peuvent être réunies en une seule unité structurelle, avec un boîtier commun, ou former deux unités structurelles distinctes, chacune avec son propre boîtier, communiquant par une liaison filaire ou une liaison sans fil.

Suivant un autre aspect de l'invention, celle-ci a trait à une installation domotique comportant plusieurs capteurs, plusieurs équipements domotiques commandés et une unité de commande ou un ensemble tels que définis précédemment communiquant avec les capteurs et les équipements domotiques commandés. De préférence, au moins un et de préférence plusieurs des capteurs constituent des unités structurellement distinctes de l'unité de commande, donc disposées dans des boîtiers distincts, non intégrés au boîtier de l'unité de commande et à distance du boîtier de l'unité de commande. De même, au moins un et de préférence plusieurs des équipements domotiques commandés constituent des unités structurellement distinctes de l'unité de commande, donc disposées dans des boîtiers distincts, non intégrés au boîtier de l'unité de commande et à distance du boîtier de l'unité de commande.

L'invention, dans ses différents aspects, offre de nombreux avantages, et notamment :
- la multiplicité des scénarios de commande pour optimiser le fonctionnement de l'installation domotique en toute circonstance ;
- une grande flexibilité de l'installation, permettant un grand nombre de combinaisons autour d'une unité de commande et le cas échéant d'une interface de programmation unique ;
- la possibilité d'utiliser des capteurs pour d'autres usages que ceux auxquels ils étaient initialement destinés (par exemple un capteur de température extérieur d'une chaudière qui va être également utilisé pour déterminer si l'on est dans une période estivale ou hivernale et induire une gestion différente des volets roulants) ;
- la possibilité grâce à l'unité de commande de rendre compatibles des produits et des capteurs qui ne l'étaient pas, et notamment la possibilité de combiner des capteurs et des équipements domotiques commandés de protocoles différents.
- la mise en oeuvre d'un automatisme bien plus performant qu'un simple système intégrant des actions en fonction de la tranche horaire sans tenir compte des conditions réelles

### BRÈVE DESCRIPTION DES FIGURES

D'autres caractéristiques et avantages de l'invention ressortiront à la lecture de la description qui suit, en référence aux figures annexées, qui illustrent :
- la figure 1, une représentation schématique d'une installation domotique mettant en oeuvre l'invention ;
- la figure 2, une représentation d'un premier écran d'une interface de programmation de l'installation de la figure 1 ;
- la figure 3, une représentation d'un deuxième écran de l'interface de programmation de l'installation de la figure 1 ;
- la figure 4, une représentation d'un troisième écran de l'interface de programmation de l'installation de la figure 1 ;
- la figure 5, une représentation d'un quatrième écran de l'interface de programmation de l'installation de la figure 1 ;
- la figure 6, une représentation d'un cinquième écran de l'interface de programmation de l'installation de la figure 1 ;
- la figure 7 une représentation d'un écran d'une variante de l'interface de programmation.

### DESCRIPTION DETAILLEE D'UN MODE DE RÉALISATION

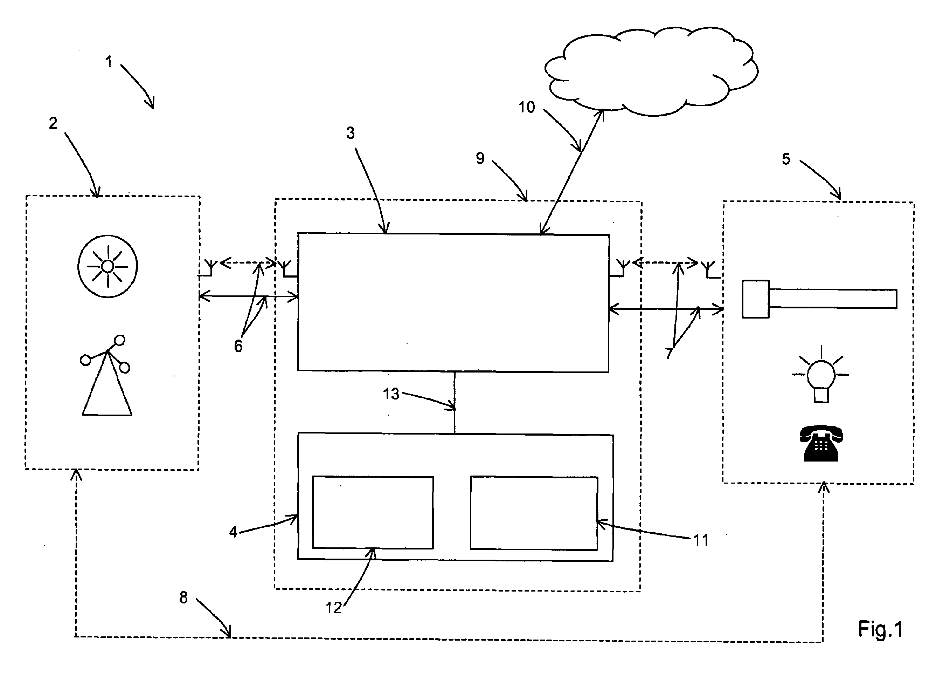

Sur la figure 1 est schématiquement illustrée une installation domotique 1 comprenant des capteurs 2. Ces capteurs 2 peuvent être de nature très diverse : par exemple un capteur d'ensoleillement, de température, de vent, de pluie mais il peut aussi être un détecteur de mouvement d'une alarme, un détecteur d'ouverture de porte ou de fenêtre, un détecteur de fumée... Chaque capteur 2 mesure une grandeur physique et envoie à un récepteur des informations qui peuvent être de nature plus ou moins complexe : information binaire pour signaler le dépassement d'un seuil, ou valeur numérique donnant l'indication précise de l'état de l'élément sensible.

Dans tous les cas les capteurs 2 sont aptes à communiquer avec une unité de commande 3 et soit sous forme filaire soit sans fil. Cette communication 6 peut être monodirectionnelle, c'est-à-dire que le capteur 2 envoie une information mais n'est pas capable d'en recevoir, ou bidirectionnelle c'est-à-dire que le capteur 2 peut envoyer une information mais peut aussi en recevoir (par exemple sous forme d'un accusé de réception d'une information tout juste envoyée). L'unité de commande intègre à cet effet des moyens de communication qui comportent au moins un récepteur des informations en provenance des capteurs, et le cas échéant des moyens d'émission.

L'unité de commande 3 dispose de moyens de calculs, d'au moins une mémoire et de moyens de filaires et/ou sans fil.

L'unité de commande 3 est en communication des équipements domotiques commandés 5 via une communication 7, qui peut être filaire ou sans fil, monodirectionnelle ou bidirectionnelle. L'unité de commande 3 comporte à cet effet des moyens de transmission comportant au moins un émetteur et le cas échéant un récepteur si la communication est bidirectionnelle. En pratique, si la communication est bidirectionnelle avec certains au moins des capteurs et certains au moins des équipements domotiques commandés, le récepteur utilisé pour réceptionner les signaux en provenance des capteurs peut également être utilisé pour réceptionner les informations en provenance des équipements domotiques commandés, alors que l'émetteur utilisé pour envoyer des messages, notamment des ordres, aux équipements domotiques commandés peut également servir à envoyer des messages aux capteurs. L'unité de commande peut également être connectée à un réseau distant via Internet.

Une interface de programmation 4 est en lien avec l'unité de commande 3. Cette interface de programmation 4 permet à l'utilisateur d'effectuer le paramétrage ou la programmation de l'installation domotique 1, et de rentrer les informations nécessaires à son bon fonctionnement. De même, c'est par cette interface 4 que l'utilisateur pourra avoir un retour d'information sur l'état de l'installation domotique. Généralement, cette interface 4 comprend un afficheur graphique 11 affichant les informations sur l'état de l'installation domotique 1, et une interface de saisie 12 par laquelle l'utilisateur peut rentrer des informations. Préférentiellement cet afficheur graphique 11 et cette interface de saisie 12 sont un seul et même objet sous la forme d'un afficheur tactile.

Dans un mode de réalisation de l'invention, l'unité de commande 3 et l'interface de programmation 4 sont assemblés dans un même boitier pour constituer un module de commande 9. Ce mode réalisation offre un avantage de compacité.

Alternativement, l'unité de commande 3 et l'interface de programmation 4 sont distants et communiquent entre eux par une voie de communication 13 qui peut être filaire ou sans fil. Cette solution est choisie lorsqu'il est possible de disposer l'unité de commande 3 dans un endroit discret du bâtiment (au garage par exemple) et de placer l'interface de programmation 4 au plus près des lieux de vie pour en faciliter la manipulation. C'est par exemple le cas lorsque l'interface de programmation 4 est constituée de moyens logiciel embarqués sur une tablette tactile ou un téléphone mobile par exemple.

Les équipements domotiques commandés 5 sont eux aussi de natures très différentes. Ce peuvent être par exemple des moteurs pour mettre en mouvement des protections solaires comme des volets roulants ou des stores, des moteurs de porte de garage ou de portail, des luminaires, une alarme, un moyen de communication permettant l'envoi de messages à des services de secours ou bien tout simplement à l'utilisateur...

Les capteurs 2 communiquent vers l'unité de commande 3 qui centralise toutes les informations. Dans quelques cas, les capteurs 2 peuvent de surcroît communiquer directement avec un équipement domotique commandé 5. Il s'agit notamment des fonctions de sécurité comme par exemple le déclenchement d'un capteur de fumée qui va communiquer avec l'unité de commande 3 mais aussi par une voie de communication 8 (filaire ou sans fil) avec une sirène pour alerter au plus vite l'utilisateur et s'affranchir de toute panne qui pourrait advenir au niveau de l'unité de commande 3. Il peut en être de même entre un moteur de store d'extérieur et son capteur de vent associé en cas de vent trop important.

Préférentiellement, l'unité de commande 3 a une position centrale dans l'installation domotique 1 et dispose de moyens de calcul et de mémoire plus importants que les capteurs 2 ou les équipements domotiques commandés 5. Ces derniers peuvent de ce fait être très simples c'est-à-dire disposer des moyens de mesure pour les capteurs ou de moyens moteurs pour les équipements domotiques commandés, d'un moyen de communication pour envoyer des informations ou recevoir des ordres sans autre moyen supplémentaire de calcul ni de mémoire. Le coût de ces capteurs 2 ou de ces équipements domotiques commandés 5 est donc réduit.

Une telle architecture offre également l'avantage d'être compatible avec des capteurs 2 ou des équipements domotiques commandés 5 anciens, pour autant qu'ils puissent communiquer avec l'unité de commande 3. L'évolution constante de l'installation domotique 1 est donc permise.

De la même manière l'invention facilite la communication avec des capteurs 2 ou des équipements domotiques commandés 5 communicant par des protocoles différents qui peuvent être inclus dans l'installation domotique 1, et être associés à d'autres capteurs 2 ou équipements domotiques commandés 5 qui étaient jusque là incompatibles. En effet, dans la mesure où les communications passent par l'unité de commande 3, il suffit que cette dernière soit pourvue de ces protocoles pour qu'elle puisse assurer la passerelle entre les différents protocoles.

L'installation domotique 1 fonctionne de la manière suivante : les capteurs 2 mesurent la valeur d'une grandeur physique (niveau de luminosité, température...) et transmettent l'information à l'unité de commande 3. L'information transmise est soit une valeur numérique soit une information binaire spécifiant par exemple si un seuil a été franchi ou pas. L'unité de commande 3 reçoit l'information et détermine quels ordres envoyer aux équipements domotiques commandés 5 en fonction de la valeur reçue et de l'instant présent. Les ordres correspondent à des scénarios de commande qui ont été prédéfinis par l'utilisateur lors d'une procédure dite de programmation ou de paramétrage, à la mise en route de l'installation domotique 1 ou lors de modifications en cours d'usage. Ces scénarios de commande comprennent au moins une consigne pour au moins un équipement domotique commandé. Préférentiellement un scénario de commande correspond à un ensemble d'ordres à destination de plusieurs équipements domotiques commandés qui sont cohérents et permettent l'optimisation d'au moins un paramètre de gestion du bâtiment. Par exemple, afin d'optimiser la consommation énergétique d'un bâtiment en hiver il peut être intéressant de baisser l'ensemble des protections solaires lors de la disparition de la luminosité alors qu'elles étaient ouvertes pour emmagasiner le maximum d'énergie solaire à travers les vitres.

L'unité de commande 3 est reliée à une interface de programmation 4 munie d'une interface de saisie 12 et d'un moyen d'affichage graphique 11. De préférence cette interface de programmation est un écran LCD ou autre, ayant une dalle tactile de sorte que l'utilisateur appuie et glisse son doigt sur les objets graphiques placés sur l'écran pour entrer les commandes ou informations qu'il désire.

Pour paramétrer l'association des niveaux de valeur des capteurs avec des scénarios de commande, l'interface préférée de l'invention fonctionne comme suit.

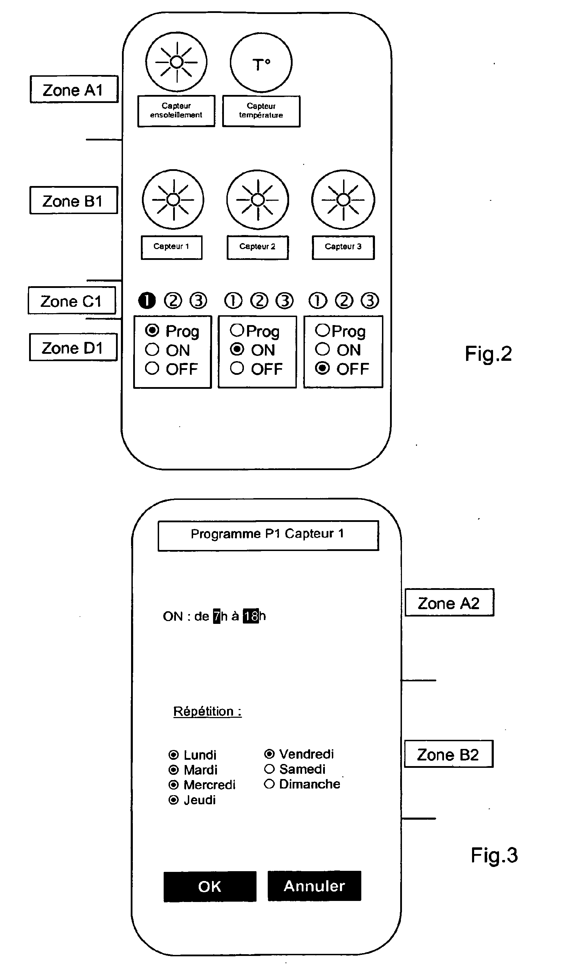

Sur un premier écran représenté sur la figure 2, l'interface de programmation est divisée en quatre zones : une première zone A1 dans laquelle sont représentées les familles de capteurs disponibles dans l'installation domotique 1, une deuxième zone B1 où les capteurs disponibles appartenant à une famille de capteurs sont listés et nommés, une troisième zone C1 permettant de sélectionner un programme (ici parmi trois programmes désignés chacun par un chiffre sur la figure 2, et que nous désignerons P1, P2, P3 dans la suite de l'exposé), et une quatrième zone D1 dans laquelle pour chaque programme de capteur 2 disponible les trois états possibles apparaissent (éteint, en marche et en mode programmation). Chacun des éléments représentés est sélectionnable par l'utilisateur. Dans la première zone A1, l'utilisateur sélectionne la famille de capteurs 2 qu'il souhaite programmer. Dans la deuxième zone B1 l'utilisateur peut sélectionner un capteur 2 particulier dans la famille de capteurs sélectionnée.

Dans la zone D1 l'utilisateur peut choisir le mode de fonctionnement du capteur 2 sélectionné. Le mode de marche « ON » indique que le capteur fonctionne dans un mode par défaut, suivant un programme par défaut non modifiable, qui peut ou non faire appel à l'unité de commande. Dans ce mode par défaut, on peut en effet prévoir que le capteur communique directement avec un ou plusieurs équipements domotiques commandés. Le mode de fonctionnement « OFF » indique que le capteur est hors service. Le mode de fonctionnement « Prog » est un mode programmable qui va maintenant être expliqué en détail.

Si, pour un programme donné P1, P2, P3 présélectionné dans la zone C1, l'utilisateur sélectionne le mode programmation d'un capteur 2, un deuxième écran apparaît, illustré sur la figure 3. Ce deuxième écran est lui divisé en deux zones : une zone A2 dans laquelle l'utilisateur peut choisir des plages horaires d'une journée et une zone B2 dans laquelle l'utilisateur peut choisir des jours de la semaine. Dans la zone A2, l'utilisateur a la possibilité de diviser les 24 heures d'une journée en autant de plages temporelles périodiques qu'il souhaite. Par exemple, il peut décider de diviser sa journée en trois plages temporelles périodiques, l'une de nuit de 0h à 7h, la deuxième de 7h à 18h et la troisième de 18h à minuit. Au niveau de l'interface il suffira de spécifier les plages temporelles périodiques pendant lesquelles le capteur sera actif. Dans cet exemple il s'agira simplement de la période 7h à 18h. Par défaut, les plages temporelles périodiques restantes sont celles pendant lesquelles il est inhibé. Cette division peut par exemple correspondre à une journée de semaine pendant laquelle il travaille à l'extérieur, les deux plages temporelles périodiques extrêmes correspondant à ses périodes de présence à son domicile, la plage temporelle périodique intermédiaire étant une période d'absence. Dans la zone B2 il peut choisir les jours de la semaine pour lesquels cette division s'applique. Dans l'exemple précédent, cette division correspond aux jours ouvrés de la semaine soit, dans ce cas, du lundi au vendredi. Ces jours seront donc sélectionnés. Les deux autres ne le seront pas. Suivant une variante non illustrée, on pourrait également envisager un choix possible d'autres plages temporelles périodiques, par exemple des numéros de semaine et/ou des mois de l'année.

Ce deuxième écran permet de choisir les plages temporelles périodiques pendant lesquelles le capteur 2 sera actif, ou pendant lesquelles les informations qu'il envoie seront inhibées.

Dans l'exemple précédent, l'utilisateur pourrait choisir que l'information capteur soit prise en compte uniquement dans la plage temporelle périodique intermédiaire car il est absent de son domicile et laisse l'automatisme gérer l'optimisation de la consommation énergétique du bâtiment en prenant en compte les informations d'un capteur 2 de luminosité.

Une zone de validation permet à l'utilisateur de revenir au premier écran.

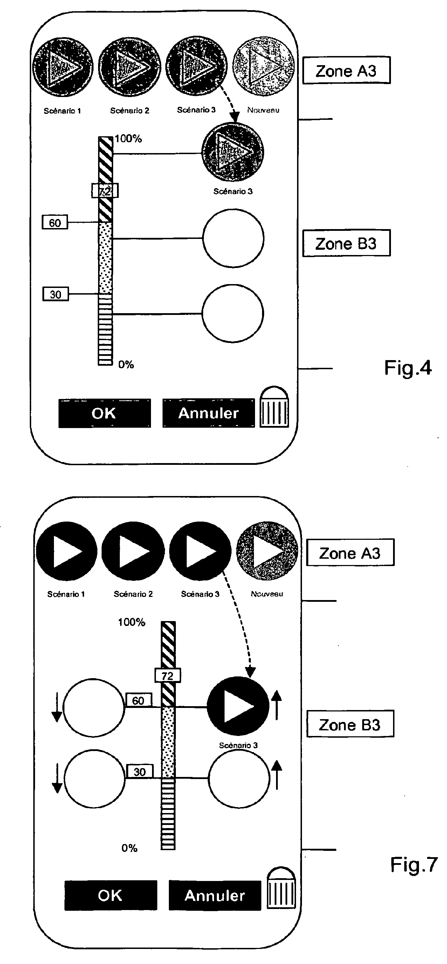

Si, toujours pour un programme donné présélectionné dans la zone C1, l'utilisateur sélectionne cette fois le capteur 2 lui-même dans la zone B1, un troisième écran apparaît, visible sur la figure 4.

Ce troisième écran est divisé en deux zones : une zone A3 où figurent les différents scénarios de commande disponibles pour ce capteur et une deuxième zone B3 sur laquelle figure une échelle de valeur possible des données envoyées par le capteur. Dans l'exemple illustré trois scénarios de commande sont accessibles à l'utilisateur dans la zone A3 et un quatrième peut être créé. Ces scénarios de commande ont préalablement été créés grâce à l'interface de programmation 4 et ont ensuite été transmis à l'unité de commande 3 qui les mémorise. Dans un mode de réalisation préféré de l'invention, l'interface de programmation mémorise simplement le nom et le fait que le scénario de commande soit disponible. De ce fait la taille mémoire occupée par les données correspondant aux scénarios de commande est plus faible.

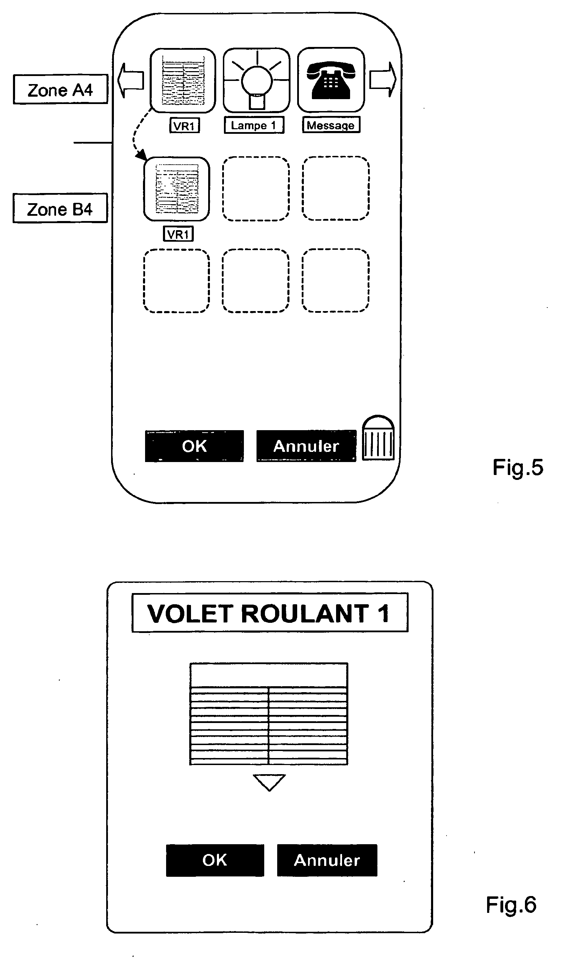

Dans le mode de créations des scénarios de commande, un quatrième écran est disponible, reproduit sur la figure 5. Cet écran est divisé en deux parties essentielles : une zone A4 où figurent les icônes des différents équipements domotiques commandés 5 disponibles dans le bâtiment et commandés par l'unité de commande 3, et une zone B4 regroupant les icônes des équipements domotiques commandés 5 effectivement impliqués dans un scénario de commande. On sélectionne un nouvel équipement pour lequel un scénario de commande doit s'appliquer en utilisant la fonction « glisser » de l'afficheur tactile pour transférer l'icône de l'équipement 5 depuis la zone A4 dans un emplacement libre de la zone B4. Lorsqu'un équipement domotique commandé 5 a été placé dans cette zone B4, une cinquième fenêtre, reproduite sur la figure 6, s'affiche avec une illustration de l'équipement domotique commandé et la possiblité de régler son état. Dans l'exemple illustré sur la figure 6, l'équipement domotique commandé est un moteur de volet roulant et son volet roulant. Pour le scénario de commande en création il est décidé de le placer dans une position intermédiaire, par exemple 50% de son ouverture normale. Lorsque le scénario de commande sera joué, ce volet roulant sera positionné dans la position demandée soit 50%. Cette opération sera reproduite pour chaque équipement domotique commandé qui est concerné par le scénario de commande, quelle que soit sa nature (moteur, lumière, alarme, téléphone...). Lorsque le scénario de commande est terminé, c'est-à-dire que chaque équipement domotique commandé concerné est programmé, l'utilisateur valide l'enregistrement et un retour à l'écran précédent est opéré. Lors de cette opération il peut être demandé par le moyen de commande via l'interface de programmation un nom pour le stockage en mémoire de ce scénario de commande. On peut également envisager qu'il soit nommé automatiquement.

De retour sur le troisième écran de la figure 4, la zone B3 présente plusieurs informations : au centre une échelle donnant les valeurs possible communiquées par le capteur 2, sur la partie gauche au moins un seuil de valeur est affiché, sur la partie droite le nom des scénario de commande sélectionnés pour chaque partie d'échelle est affiché. Dans la phase de programmation l'utilisateur fait varier le niveau des valeurs seuils. Dans l'exemple présent on utilise la fonction « glisser » d'un afficheur tactile c'est-à-dire que l'utilisateur positionne son doigt sur le paramètre à modifier et le fait glisser sur l'écran pour atteindre la valeur qu'il souhaite. Les seuils étant fixés, ils divisent l'échelle en autant de parties que le nombre de seuils plus une. Chaque partie d'échelle peut être mise en évidence par une couleur différente.

De plus, la valeur actuelle renvoyée par le capteur 2 est affichée sur l'échelle (dans l'exemple illustré sur la figure 3, il s'agit de la valeur 72%).

A chaque partie de l'échelle définie, correspond une zone dans laquelle l'utilisateur peut associer un scénario de commande particulier. Dans cet exemple il utilise aussi la fonction « glisser » en sélectionnant un des scénarios de commande placé dans la zone A3 et en le positionnant sur la zone correspondant à la partie d'échelle que l'on veut associer à ce scénario de commande.

Si l'on souhaite modifier le scénario de commande associé à une partie d'échelle, il suffit par le même principe de faire glisser ce scénario de commande dans la corbeille figurant sur une autre partie de l'écran, par exemple en bas, et à recommencer l'opération avec un nouveau scénario de commande, ou, plus simplement encore, de directement faire glisser sur le scénario de commande précédent le nouveau scénario sélectionné.

Une fois les réglages opérés une touche de validation permet à l'utilisateur de revenir au premier écran.

Ces opérations permettent de paramétrer l'installation domotique 1 pour fonctionner automatiquement selon les souhaits de l'utilisateur. Par exemple, le mode de fonctionnement choisi par l'utilisateur correspond au tableau 1 ci-après reproduit.

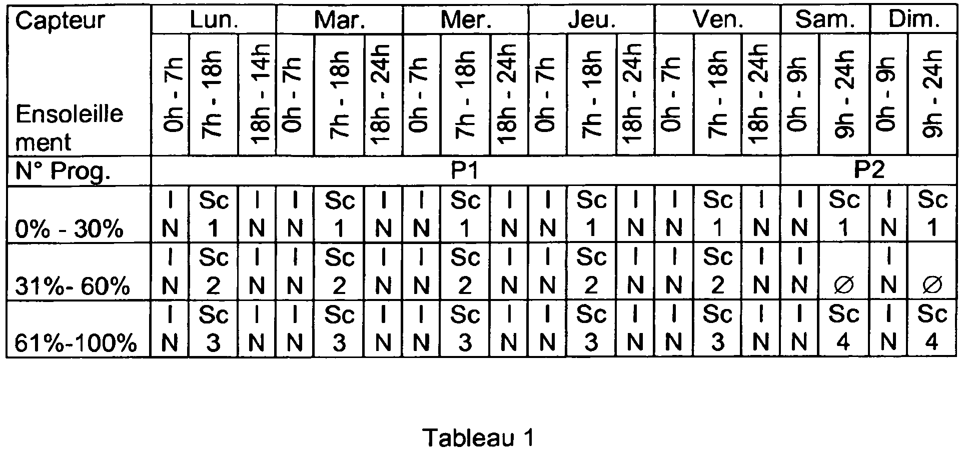

Dans cet exemple l'utilisateur a choisi de diviser sa journée en trois plages temporelles périodiques comme dans l'exemple cité précédemment. Le capteur 2 concerné est un capteur de luminosité dont les informations seront inhibées (IN) durant les deux plages temporelles périodiques extrêmes (0h-7h et 18h-24h), et seront utilisées dans la plage temporelle périodique intermédiaire soit 7h-18h, et ce pour les jours du lundi au vendredi. Les valeurs du capteur 2 ont été normées dans cet exemple pour les exprimer en pourcentage et par exemple créer deux seuils qui génèrent trois plages de valeurs. Pour ce même capteur il sera possible de définir d'autres plages temporelles périodiques horaires pour les jours non sélectionnés. Dans ce cas il sélectionnera un autre programme (par exemple P2) pour redéfinir des plages temporelles périodiques horaires. Dans l'exemple du tableau 1, les journées du samedi et du dimanche sont divisées en deux plages temporelles périodiques avec des horaires différents.

Si l'on regarde le fonctionnement de l'installation domotique 1 par rapport à ce tableau, on peut voir que l'utilisateur a choisi d'appliquer trois scénarios de commande différents (Sc1, Sc2, Sc3) pour les trois plages de valeur du capteur. Si l'on se place en hiver, ce pourrait être de maintenir les volets roulants fermés lorsque la luminosité est faible (0% - 30%) et que le bâtiment ne pourra pas bénéficier des apports énergétiques du soleil, de les ouvrir uniquement côté sud du bâtiment lorsque la luminosité est intermédiaire, et de les ouvrir complètement lorsque la luminosité est maximale et que les apports thermiques peuvent être importants.

L'automatisme fonctionnera de cette manière tous les jours du lundi au vendredi. Le samedi et le dimanche, l'utilisateur estime qu'il sera présent à son domicile. Il aura par exemple divisé sa journée en deux plages horaires : l'une de 0h à 9h où le capteur est inhibé, l'autre de 9h à 24h où il prévoit d'être actif à son domicile. Dans cet exemple, l'utilisateur prévoit un quatrième scénario de commande lorsque la luminosité est maximale pour par exemple abaisser ses stores à mi hauteur et ainsi éviter d'être gêné par une luminosité trop forte. De même, il réutilise le premier scénario de commande pour fermer l'ensemble de ses volets roulants si la luminosité descend à des valeurs faibles correspondant à la fin du jour.

Ceci n'est qu'un exemple de programmation, et bien d'autres combinaisons sont possibles avec des capteurs de nature différente comme la température, les détecteurs de mouvement, les capteurs de gaz (CO2), les détecteurs de fumée...

Les actions peuvent elles aussi être très diverses comme par exemple agir sur des équipements domotiques commandés de protection solaire, mais aussi sur la mise en marche d'une sirène, l'envoi d'un message téléphonique ou d'un message électronique...

L'utilisateur pourra définir des scénarios de commande pour chaque capteur, et l'unité de commande 3 saura gérer des priorités soit paramétrées par le fournisseur de la technologie, soit parce que l'utilisateur aura lui-même paramétré les priorités qu'il souhaite. Par exemple, les capteurs 2 de sécurité comme les détecteurs de fumée seront prioritaires sur tout autre capteur. De même un capteur d'alarme détectant une intrusion sera prioritaire sur celui d'ensoleillement pour fermer tous les volets roulants alors que l'ordre contraire aurait été généré par les scénarios de commande liés à ce deuxième capteur.

De même, il n'est pas nécessaire d'utiliser des capteurs 2 qui envoient une valeur numérique. Les capteurs 2 qui envoient une valeur binaire correspondant par exemple au franchissement d'un seuil prédéfini peuvent être intégrés à l'installation domotique 1 sans que le réglage de seuil soit possible et avec seulement deux états prédéfinis.

Lorsque l'information d'un capteur 2 doit être inhibée, deux méthodes peuvent être mises en oeuvre : soit l'unité de commande 3 ne tient pas compte de cette information dans sa gestion de l'installation domotique, soit l'unité de commande 3 envoi un ordre au capteur 2 en début de plage temporelle périodique pour qu'il se mette en veille pour une période donnée ou jusqu'à l'arrivée d'un ordre de réveil.

Un autre exemple des programmes qui peuvent exister est la définition d'un programme associé à un capteur pour le comportement de l'installation domotique à l'aurore (levée des volets roulants, chauffage de la salle de bain, mise en route de la machine à café...) et un autre pour le crépuscule (fermeture des volets roulants, chauffage des chambres, mise en route des lumières de la zone de vie...).

Naturellement, diverses variantes sont possibles. Suivant une variante du troisième écran illustrée sur la figure 7, certains au moins des scénarios de commande ne sont pas affectés à des plages de valeurs d'un signal en provenance d'un capteur, mais directement à des seuils et surtout à des sens de passage de ces seuils, caractérisant des changements d'état du signal en provenance du capteur et, in fine de la grandeur physique surveillée par le capteur. En effet, une partie d'échelle peut être vaste et le comportement de l'installation domotique n'a pas nécessairement vocation à être identique quand, en reprenant l'exemple précédent, la luminosité passe de 29% à 31 % ou quand elle passe de 61% à 59%. Ainsi dit l'utilisateur peut-il affecter deux scénarios de commande à une partie d'échelle qui seront exécutés en fonction du seuil qui aura été franchi. La représentation graphique de ce mode de fonctionnement est légèrement différente dans la mesure où les scénarios de commande sont associés aux seuils et une flèche va signifier dans quel sens doit être franchi le seuil pour être que le scénario de commande soit mis en oeuvre.

Pour revenir à l'exemple illustré par le tableau 1, l'utilisateur utilisant le principe de passage des seuils illustré sur la figure 7 réalisera le même type d'enchaînement qui sera de maintenir les volets roulants fermés lorsque la luminosité est faible (0% - 30%), de les ouvrir uniquement côté sud lorsque la luminosité augmente et passe dans la plage intermédiaire, de les ouvrir complètement lorsque la luminosité augmente davantage et devient maximale et de les laisser dans le même état lorsque la luminosité diminue et revient au niveau intermédiaire. Dans ce cas, on imagine qu'un scénario de commande peut simplement être vide ce qui revient à ne pas changer l'état des équipements domotiques commandés 5 lorsqu'il est appelé.

On peut prévoir que l'interface de programmation 4 et l'unité de commande 3 soient dédiées à l'un ou l'autre seulement des deux modes de programmation par plage de valeurs (figure 4) ou passage de seuil (figure 7). On peut également prévoir qu'une même unité de commande 3 et une même interface de programmation 4 puissent permettre un paramétrage des scénarios de commande suivant l'un et l'autre modes de programmation. On peut par exemple prévoir que l'utilisateur en faisant glisser sur la figure 4 la ligne rattachant le scénario de commande à l'échelle de valeurs du capteur depuis sa position illustré au centre d'une plage de valeurs jusqu'à la valeur seuil de la plage en question induise un passage automatique à l'écran de la figure 7.

## Revendications

1. Procédé de commande d'une installation domotique (1) comportant plusieurs capteurs (2), plusieurs équipements domotiques commandés (5) et une unité de commande (3) communiquant avec les capteurs (2) et les équipements domotiques commandés (5), **caractérisé en ce qu'**il comporte une procédure de paramétrage comportant au moins les étapes suivantes réalisées par l'intermédiaire d'une interface de programmation (4) reliée à l'unité de commande (3) :
- choix d'un capteur à paramétrer parmi les capteurs (2) ;
- association au capteur à paramétrer d'au moins une plage temporelle périodique d'activation ;
- association à au moins un état ou un changement d'état du signal en provenance du capteur à paramétrer d'au moins un scénario de commande ;
et **en ce qu'**il comporte en outre les étapes ultérieures suivantes :
- à un instant courant appartenant à une plage temporelle périodique d'activation associée à un capteur paramétré par la procédure de paramétrage, parmi une ou plusieurs plages temporelles associées au capteur paramétré, et en fonction d'au moins une valeur courante d'un signal en provenance du capteur paramétré, sélection par l'unité de commande (3) d'un scénario de commande associé, par la procédure de paramétrage, audit au moins un état ou changement d'état du signal en provenance du capteur paramétré,
- envoi par l'unité de commande à au moins un des équipements domotiques commandés (5) d'au moins un ordre fonction du scénario de commande sélectionné.

2. Procédé de commande d'une installation domotique selon la revendication 1, **caractérisé en ce que** l'état ou le changement d'état sont
- une plage de valeurs délimitées par au moins une valeur seuil associée au capteur paramétré ou
- un passage d'une première plage de valeurs délimitée par une valeur seuil associée au capteur paramétré à une deuxième plage de valeurs délimitée par la valeur seuil ou
- une valeur d'état du capteur paramétré.

3. Procédé de commande d'une installation domotique selon la revendication 2, **caractérisé en ce qu'**il comporte une étape de mémorisation de la ou des valeurs seuils associées au capteur paramétré.

4. Procédé de commande d'une installation domotique selon l'une quelconque des revendications précédentes, **caractérisé en ce qu'**il comporte une procédure de priorisation comportant :
- l'association à au moins un état ou changement d'état d'au moins un capteur prioritaire parmi les capteurs d'un niveau de priorité élevé et d'un scénario de commande prioritaire,
- en cas de survenance de l'état ou du changement d'état associé au niveau de priorité élevé, l'envoi par l'unité de commande à au moins un des équipements domotiques commandés d'au moins un ordre fonction du scénario de commande prioritaire et l'inhibition de la sélection d'au moins un autre scénario de commande.

5. Procédé de commande d'une installation domotique selon l'une quelconque des revendications précédentes, **caractérisé en ce que** l'ordre envoyé à l'équipement domotique commandé est un code identifiant le scénario de commande retenu, le procédé comportant en outre une étape d'exécution de l'ordre par l'équipement domotique commandé en fonction du code du scénario de commande retenu, l'ordre étant programmé dans l'équipement domotique commandé.

6. Procédé selon l'une quelconque des revendications précédentes, **caractérisé en ce que** l'étape d'association d'au moins un scénario de commande comporte au moins une des étapes suivantes :
- la sélection d'au moins une valeur seuil du signal en provenance du capteur à paramétrer et la sélection d'au moins un premier scénario de commande assigné à un intervalle de valeurs borné par la valeur seuil ;
- la sélection d'au moins une valeur seuil du signal en provenance du capteur à paramétrer et la sélection d'au moins un premier scénario de commande assigné à un passage du signal en provenance du capteur à paramétrer d'une première plage de valeurs délimitée par la valeur seuil à une deuxième plage de valeurs délimitée par la valeur seuil ;
- la sélection d'au moins une valeur d'état du signal en provenance du capteur à paramétrer et la sélection d'au moins un premier scénario de commande assigné à la valeur d'état.

7. Procédé selon l'une quelconque des revendications 1 à 6, **caractérisé en ce qu'il** comporte une étape de sélection d'un programme parmi plusieurs programmes possibles, les étapes de choix d'un capteur à paramétrer parmi les capteurs, d'association au capteur à paramétrer d'au moins une plage temporelle périodique d'activation et/ou au moins une plage temporelle périodique d'inhibition, et d'association à au moins un état ou un changement d'état du signal en provenance du capteur à paramétrer d'au moins un scénario de commande étant affectées au programme sélectionné.

8. Procédé selon l'une quelconque des revendications 1 à 7, **caractérisé en ce que** l'étape de choix du capteur comporte une étape préliminaire de choix d'un type de capteur parmi plusieurs type de capteurs, suivie d'une étape de choix d'un capteur du type choisi parmi plusieurs capteurs du type choisi.

9. Procédé de commande d'une installation domotique selon l'une quelconque des revendications 1 à 8, **caractérisé en ce qu'**il comporte au moins une étape d'association à au moins un scénario de commande d'au moins un ordre à transmettre à au moins un des équipements domotiques commandés.

10. Procédé de paramétrage d'une installation domotique (1) comportant plusieurs capteurs (2), plusieurs équipements domotiques commandés (5) et une unité de commande (3) communiquant avec les capteurs (2) et les équipements domotiques commandés (5), **caractérisé en ce qu'il** comporte les étapes suivantes réalisées par l'intermédiaire d'une interface de programmation (4) reliée à l'unité de commande (3) :
- choix d'un capteur à paramétrer parmi les capteurs ;
- association au capteur à paramétrer d'au moins une plage temporelle périodique d'activation et/ou au moins une plage temporelle périodique d'inhibition ;
- association à au moins un état ou un changement d'état du signal en provenance du capteur à paramétrer d'au moins un scénario de commande.

11. Interface de programmation (4) pour la mise en oeuvre du procédé de la revendication 10 de paramétrage d'une installation domotique (1) comportant plusieurs capteurs (2), plusieurs équipements domotiques commandés (5) et une unité de commande (3) communiquant avec les capteurs (2) et les équipements domotiques commandés (5) et reliée à l'interface de programmation (4), l'interface de programmation (4) présentant un afficheur graphique (11) affichant :
- un écran pour choisir un capteur à paramétrer parmi les capteurs ;
- un écran pour associer au capteur à paramétrer au moins une plage temporelle périodique d'activation et/ou au moins une plage temporelle périodique d'inhibition ;
- un écran pour associer au moins un scénario de commande à au moins un état ou un changement d'état du signal en provenance du capteur à paramétrer.

12. Ensemble comportant une unité de commande (3) pour communiquer avec plusieurs capteurs (2) et plusieurs équipements domotiques commandés (5) d'une installation domotique, l'unité de commande (3) comportant :
- des moyens de réception de signaux en provenance des capteurs (2);
- des moyens de mémorisation d'un ou plusieurs scénarios de commande, chacun des scénarios de commande étant associé d'une part à au moins une plage temporelle périodique associée à au moins un capteur paramétré parmi les capteurs et d'autre part à au moins un état ou changement d'état d'un signal en provenance du capteur paramétré ;
- des moyens de sélection d'au moins un scénario de commande courant parmi le ou les scénarios de commande mémorisés, lorsque l'état ou le changement d'état du capteur paramétré associé au scénario de commande courant survient à un instant courant dans la plage temporelle périodique associée,
- des moyens de transmission à l'équipement domotique commandé (5) d'au moins un ordre fonction du scénario de commande courant,
**caractérisé en ce qu'il** comporte en outre une interface de programmation (4) selon la revendication 11 reliée à l'unité de commande (3).

13. Ensemble selon la revendication 12, **caractérisé en ce que** l'état ou le changement d'état sont :
- une plage de valeurs délimitées par au moins une valeur seuil associée au capteur paramétré ou
- un passage d'une première plage de valeurs délimitée par une valeur seuil associée au capteur paramétré à une deuxième plage de valeurs délimitée par la valeur seuil ou
- une valeur d'état du capteur paramétré.

14. Installation domotique (1) comportant plusieurs capteurs (2), plusieurs équipements domotiques commandés (5), **caractérisée en ce qu'**elle comporte un ensemble selon la revendication 12 ou la revendication 13, communiquant avec les capteurs (2) et les équipements domotiques commandés (5).

## Patentansprüche

1. Verfahren zur Steuerung einer haustechnischen Anlage (1), die mehrere Sensoren (2), mehrere gesteuerte haustechnische Ausrüstungen (5) und eine Steuereinheit (3) aufweist, die mit den Sensoren (2) und den gesteuerten haustechnischen Ausrüstungen (5) kommuniziert, **dadurch gekennzeichnet, dass** es eine Parametrierungsprozedur aufweist, die mindestens die folgenden Schritte umfasst, die über eine Programmierungsschnittstelle (4) durchgeführt werden, die mit der Steuereinheit (3) verbunden ist:
- Auswählen eines zu parametrierenden Sensors aus den Sensoren (2),
- Zuordnen mindestens eines periodischen zeitlichen Aktivierungsbereichs zu dem zu parametrierenden Sensor,
- Zuordnen mindestens eines Steuerungsszenarios zu mindestens einem Zustand oder einer Zustandsänderung des Signals von dem zu parametrierenden Sensor,
und dass es ferner die folgenden späteren Schritte umfasst:
- Auswählen durch die Steuereinheit (3), zu einem laufenden Moment, der zu einem periodischen zeitlichen Aktivierungsbereich gehört, der einem durch die Parametrierungsprozedur parametrierten Sensor zugeordnet ist, aus einem oder mehreren zeitlichen Bereichen, die dem parametrierten Sensor zugeordnet sind, und in Abhängigkeit von mindestens einem laufenden Wert eines Signals von dem parametrierten Sensor, eines Steuerungsszenarios, das durch die Parametrierungsprozedur dem mindestens einen Zustand oder die mindestens eine Zustandsänderung des Signals von dem parametrierten Sensor zugeordnet ist,
- Senden durch die Steuereinheit an mindestens eine der gesteuerten haustechnischen Ausrüstungen (5) mindestens eines Befehls in Abhängigkeit von dem ausgewählten Steuerungsszenario.

2. Verfahren zur Steuerung einer haustechnischen Anlage nach Anspruch 1, **dadurch gekennzeichnet, dass** der Zustand oder die Zustandsänderung folgendes sind:
- ein Wertebereich, der von mindestens einem dem parametrierten Sensor zugeordneten Schwellwert begrenzt ist, oder
- ein Übergang von einem ersten Wertebereich, der von einem dem parametrierten Sensor zugeordneten Schwellwert begrenzt ist, zu einem zweiten Wertebereich, der von dem Schwellwert begrenzt ist, oder
- ein Zustandswert des parametrierten Sensors.

3. Verfahren zur Steuerung einer haustechnischen Anlage nach Anspruch 2, **dadurch gekennzeichnet, dass** es einen Speicherschritt des oder der dem parametrierten Sensor zugeordneten Schwellwerte aufweist.

4. Verfahren zur Steuerung einer haustechnischen Anlage nach einem der vorangehenden Ansprüche, **dadurch gekennzeichnet, dass** es eine Priorisierungsprozedur aufweist, die umfasst:
- die Zuordnung zu mindestens einem Zustand oder einer Zustandsänderung mindestens eines prioritären Sensors von den Sensoren, eines hohen Prioritätsniveaus und eines prioritären Steuerungsszenarios,
- bei Auftreten des dem hohen Prioritätsniveau zugeordneten Zustands oder der Zustandsänderungen den Versand durch die Steuereinheit an mindestens eine der gesteuerten haustechnischen Ausrsüstungen mindestens eines Befehls in Abhängigkeit von dem prioritären Steuerungsszenario und Hemmung der Auswahl mindestens eines anderen Steuerungsszenarios.

5. Verfahren zur Steuerung einer haustechnischen Anlage nach einem der vorangehenden Ansprüche, **dadurch gekennzeichnet, dass** der an die gesteuerte haustechnische Ausrüstung versandte Befehl ein Code ist, der das entsprechende Steuerungsszenario identifiziert, wobei das Verfahren ferner einen Durchführungsschritt des Befehls durch die gesteuerte haustechnische Ausrüstung in Abhängigkeit vom Code des entsprechenden Steuerungsszenarios aufweist, wobei der Befehl in der gesteuerten haustechnischen Ausrüstung programmiert ist.

6. Verfahren nach einem der vorangehenden Ansprüche, **dadurch gekennzeichnet, dass** der Zuordnungsschritt mindestens eines Steuerungsszenarios mindestens einen der folgenden Schritte aufweist:
- das Auswählen mindestens eines Schwellwerts des Signals von dem zu parametrierenden Sensor und das Auswählen mindestens eines ersten Steuerungsszenarios, das einem Werteintervall zugeordnet ist, das von dem Schwellwert begrenzt ist,
- das Auswählen mindestens eines Schwellwerts des Signals von dem zu parametrierenden Sensor und das Auswählen mindestens eines ersten Steuerungsszenarios, das einem Übergang des Signals von dem zu parametrierenden Sensor aus einem ersten Wertebereich, der von dem Schwellwert begrenzt ist, zu einem zweiten Wertebereich, der von dem Schwellwert begrenzt ist,
- das Auswählen mindestens eines Zustandswerts des Signals von dem zu parametrierenden Sensor und das Auswählen mindestens eines ersten Steuerungsszenarios, das dem Zustandswert zugeordnet ist.

7. Verfahren nach einem der Ansprüche 1 bis 6, **dadurch gekennzeichnet, dass** es einen Auswahlschritt eines Programms aus mehreren möglichen Programmen aufweist, wobei die Schritte der Auswahl eines zu parametrierenden Sensors aus den Sensoren, der Zuordnung zu dem zu parametrierenden Sensor mindestens eines periodischen zeitlichen Aktivierungsbereichs und/oder mindestens eines periodischen zeitlichen Hemmungsbereichs und der Zuordnung zu mindestens einem Zustand oder einer Zustandsänderung des Signals von dem zu parametrierenden Sensor mindestens eines Steuerungsszenarios dem ausgewählten Programm zugeordnet sind.

8. Verfahren nach einem der Ansprüche 1 bis 7, **dadurch gekennzeichnet, dass** der Schritt der Auswahl des Sensors einen vorherigen Schritt der Auswahl eines Sensortyps aus mehreren Sensortypen aufweist, gefolgt von einem Schritt der Auswahl eines Sensors des Typs, der aus mehreren Sensoren des ausgewählten Typs ausgewählt wurde.

9. Verfahren zur Steuerung einer haustechnischen Anlage nach einem der Ansprüche 1 bis 8, **dadurch gekennzeichnet, dass** es mindestens einen Schritt der Zuordnung zu mindestens einem Steuerungsszenario mindestens eines Befehls aufweist, der an mindestens eine der gesteuerten haustechnischen Ausrüstungen zu übermitteln ist.

10. Verfahren zur Parametrierung einer haustechnischen Anlage (1), die mehrere Sensoren (2), mehrere gesteuerte haustechnische Ausrüstungen (5) und eine Steuereinheit (3) aufweist, die mit den Sensoren (2) und den gesteuerten haustechnischen Ausrüstungen (5) kommuniziert, **dadurch gekennzeichnet, dass** es die folgenden Schritte aufweist, die von einer Programmierungsschnittstelle (4) durchgeführt werden, die mit der Steuereinheit (3) verbunden ist:
- Auswählen eines zu parametrierenden Sensors aus den Sensoren (2),
- Zuordnen mindestens eines periodischen zeitlichen Aktivierungsbereichs und/oder mindestens eines periodischen zeitlichen Hemmungsbereichs zu dem zu parametrierenden Sensor,
- Zuordnen mindestens eines Steuerungsszenarios zu mindestens einem Zustand oder einer Zustandsänderung des Signals von dem zu parametrierenden Sensor.

11. Programmierungsschnittstelle (4) zur Umsetzung des Verfahrens von Anspruch 10 der Parametrierung einer haustechnischen Anlage (1), die mehrere Sensoren (2), mehrere gesteuerte haustechnische Ausrüstungen (5) und eine Steuereinheit (3) aufweist, die mit den Sensoren (2) und den gesteuerten haustechnischen Ausrüstungen (5) kommuniziert und mit der Programmierungsschnittstelle (4) verbunden ist, wobei die Programmierungsschnittstelle (4) eine Grafikanzeige (11) aufweist, die anzeigt:
- einen Bildschirm zum Auswählen eines zu parametrierenden Sensors von den Sensoren,
- einen Bildschirm zum Zuordnen mindestens eines periodischen zeitlichen Aktivierungsbereichs und/oder mindestens eines periodischen zeitlichen Hemmungsbereichs zum zu parametrierenden Sensor,
- einen Bildschirm zum Zuordnen mindestens eines Steuerungsszenarios zu mindestens einem Zustand oder einer Zustandsänderung des Signals von dem zu parametrierenden Sensor.

12. Gruppe, die eine Steuereinheit (3) aufweist, um mit mehreren Sensoren (2) und mehreren gesteuerten haustechnischen Ausrüstungen (5) einer haustechnischen Anlage zu kommunizieren, wobei die Steuereinheit (3) aufweist:
- Empfangsmittel von Signalen von den Sensoren (2),
- Speichermittel eines oder mehrerer Steuerungsszenarien, wobei jedes der Steuerungsszenarien einerseits mindestens einem periodischen zeitlichen Bereich, der mindestens einem zu parametrierenden Sensor der Sensoren zugeordnet ist, und andererseits mindestens einem Zustand oder einer Zustandsänderung eines Signals von dem parametrierten Sensor zugeordnet ist,
- Auswahlmittel mindestens eines laufenden Steuerungsszenarios aus dem oder den gespeicherten Steuerungsszenarien, wenn der Zustand oder die Zustandsänderung des parametrierten Sensors, der dem laufenden Steuerungsszenario zugeordnet ist, zu einem laufenden Moment innerhalb des zugeordneten periodischen zeitlichen Bereichs auftritt,
- Übertragungsmittel mindestens eines Befehls in Abhängigkeit von dem laufenden Steuerungsszenarios an die gesteuerte haustechnische Ausrüstung (5), **dadurch gekennzeichnet, dass** sie ferner eine Programmierungsschnittstelle (4) nach Anspruch 11 aufweist, die mit der Steuereinheit (3) verbunden ist.

13. Gruppe nach Anspruch 12, **dadurch gekennzeichnet, dass** der Zustand oder die Zustandsänderung sind:
- ein Wertebereich, der von mindestens einem dem parametrierten Sensor zugeordneten Schwellwert begrenzt ist, oder
- ein Übergang von einem ersten Wertebereich, der von einem dem parametrierten Sensor zugeordneten Schwellwert begrenzt ist, zu einem zweiten Wertebereich, der von dem Schwellwert begrenzt ist, oder
- ein Zustandswert des parametrierten Sensors.

14. Haustechnische Anlage (1), die mehrere Sensoren (2), mehrere gesteuerte haustechnische Ausrüstungen (5) aufweist, **dadurch gekennzeichnet, dass** sie eine Gruppe nach Anspruch 12 oder Anspruch 13 aufweist, die mit den Sensoren (2) und den gesteuerten haustechnischen Ausrüstungen (5) kommuniziert.

## Claims

1. A method for controlling a home automation installation (1) including several sensors (2), several pieces of controlled home automation equipment (5), and a control unit (3) communicating with the sensors (2) and the pieces of controlled home automation equipment (5), **characterized in that** it includes a parameterization procedure, including at least the following steps carried out by means of a programming interface (4) connected to the control unit (3):
- choosing a sensor to be parameterized among the sensors;
- associating at least one periodic activation time range with the sensor to be parameterized; and
- associating at least one state or change of state of the signal coming from the sensor to be parameterized with at least one control scenario,
and **in that** it further includes the following subsequent steps:
- at a current moment belonging to a periodic activation time range associated with a parameterized sensor by the parameterization procedure, from among one or more time ranges associated with the parameterized sensor, and as a function of at least one current value of a signal coming from the parameterized sensor, selecting with the control unit (3) a control scenario associated by the parameterization procedure with the at least one state or change of state of the signal coming from the parameterized sensor;
- sending with the control unit to at least one of the pieces of controlled home automation equipment (5), at least one command depending on the selected control scenario.

2. The method for controlling a home automation installation according to claim 1, **characterized in that** the state or the change of state is one of the following:
- a value range delimited by at least one threshold value associated with the parameterized sensor, or
- a passage from a first value range delimited by a threshold value associated with the parameterized sensor to a second value range delimited by the threshold value, or
- a state value of the parameterized sensor.

3. The method for controlling a home automation installation according to claim 2, **characterized in that** it includes a step of storing the one or more threshold values associated with the parameterized sensor.

4. The method for controlling a home automation installation according to any one of the preceding claims, **characterized in that** it includes a prioritization procedure including:
- associating at least one state or change of state with at least one priority sensor among the sensors, with a high priority level and with a high-priority control scenario,
- whenever the state or change of state associated with a high priority level occurs, sending with the control unit to at least one of the pieces of controlled home automation equipment at least one command depending on the high-priority control scenario inhibiting the selection of at least one other control scenario.

5. The method for controlling a home automation installation according to any one of the preceding claims, **characterized in that** the command sent to the piece of controlled home automation equipment is a code identifying the selected control scenario, the method also including a step of carrying out the command with the piece of controlled home automation equipment as a function of the selected control scenario code, the command being programmed into the piece of controlled home automation equipment.

6. according to any one of the preceding claims,, **characterized in that** the step of associating at least one control scenario includes at least one of the following steps:
- selecting at least one threshold value of the signal coming from the sensor to be parameterized and selecting at least one first control scenario assigned to a value interval bounded by the threshold value;
- selecting at least one threshold value of the signal coming from the sensor to be parameterized and selecting at least one first control scenario assigned to a passage of the signal from the sensor to be parameterized from a first value range delimited by the threshold value to a second value range delimited by the threshold value;
- selecting at least one state value of the signal coming from the sensor to be parameterized and selecting at least one first control scenario assigned to the state value.

7. The method according to any one of claims 1 to 6, **characterized in that** it includes a step of selecting one program from among several possible programs, the steps of selecting a sensor to be parameterized among the sensors, associating the sensor to be parameterized with at least one periodic activation time range and/or at least one periodic inhibition time range, and associating at least one control scenario with at least one state or change of state of the signal from the sensor to be parameterized being allocated to the selected program.

8. The method according to any one of claims 1 to 7, **characterized in that** the step of choosing the sensor also includes a preliminary step of choosing a type of sensor from among several types of sensors followed by a step of choosing a sensor of the chosen type from among several sensors of the chosen type.

9. The method for controlling a home automation installation according to any one claims 1 to 8, **characterized in that** it includes at least one step of associating at least one control scenario with at least one command to be sent to at least one of the pieces of controlled home automation equipment.

10. A method for parameterizing a home automation installation (1) including several sensors (2), several pieces of controlled home automation equipment (5) and a control unit (3) communicating with the sensors (2) and the pieces of controlled home automation equipment (5), **characterized in that** it includes the following steps carried out by means of a programming interface (4) connected to the control unit (3):
- choosing a sensor to be parameterized from among the sensors;
- associating at least one periodic activation time range and/or at least one periodic inhibition time range with the sensor to be parameterized; and
- associating at least one state or change of state of the signal from the sensor to be parameterized with at least one control scenario.

11. A programming interface (4) for carrying out the method of claim 10 for parameterizing a home automation installation (1) including several sensors (2), several pieces of controlled home automation equipment (5) and a control unit (3) communicating with the sensors (2) and the pieces of controlled home automation equipment (5) and connected to the programming interface (4), the programming interface (4) having a graphic display (11) displaying:
- at least one screen to choose a sensor to be parameterized from among the sensors;
- at least one screen for associating the sensor to be parameterized with at least one periodic activation time range and/or at least one periodic inhibition time range; and
- at least one screen for associating at least one control scenario with at least one state or change of state of the signal from the sensor to be parameterized.

12. Assembly comprising a control unit (3) for communicating with several sensors (2) and several pieces of controlled home automation equipment (5) of a home automation installation, wherein the control unit (3) includes:
- means for receiving signals from the sensors (2);
- means for storing one or more control scenarios, each of the control scenarios being associated on the one hand with at least one periodic time range associated with at least one parameterized sensor from among the sensors, and on the other hand with at least one state or change of state of a signal from the parameterized sensor;
- means for selecting at least one current control scenario from among the one or more stored control scenarios, when the state or change of state of the parameterized sensor associated with the current control scenario occurs at a current moment in the associated periodic time range; and
- means for transmitting to the piece of controlled home automation equipment (5) at least one command depending on the current control scenario.
**characterized in that** it also includes a programming interface (4) according to claim 11 connected to the control unit (3).

13. An assembly according to claim 1, **characterized in that** the state or the change of state is one of the following:
- a value range delimited by at least one threshold value associated with the parameterized sensor, or
- a passage from a first value range delimited by a threshold value associated with the parameterized sensor to a second value range delimited by the threshold value, or
- a state value of the parameterized sensor.

14. A home automation installation (1) including several sensors (2), several pieces of controlled home automation equipment (5), **characterized in that** it includes a control unit (3) according to claim 13 or an assembly according to claim 14 communicating with the sensors (2) and the pieces of controlled home automation equipment (5).
